# EUROPEAN PATENT SPECIFICATION

(11) **EP 3 243 053 B1**
(45) Date of publication and mention of the grant of the patent: **12.06.2019**
(21) Application number: 16700241.9
(22) Date of filing: 05.01.2016
(51) Int. Cl.: G01J 5/08, G01J 5/12, G01J 5/02, G01B 11/02, A47J 31/44, A47J 31/56, F24C 7/08

(54) **A HOUSEHOLD APPLIANCE COMPRISING A THERMAL SENSOR**
HAUSHALTSGERÄT MIT EINEM WÄRMESENSOR
APPAREIL MÉNAGER COMPRENANT UN CAPTEUR THERMIQUE

(30) Priority: 05.01.2015 TR 201500064
(43) Date of publication of application: 15.11.2017
(73) Proprietor: Arçelik Anonim Sirketi, 34950 Istanbul (TR)
(72) Inventor: OZDEMIR, Mehmet Cahit, 34950 Istanbul (TR); YAMAN, Onur, 34950 Istanbul (TR); YORUKOGLU, Ahmet, 34950 Istanbul (TR); HAZIR, Sefa, 34950 Istanbul (TR)
(86) International application number: PCT/EP2016/050048
(87) International publication number: WO 2016/110477

(56) References cited:
- EP-A1- 2 389 848
- US-A1- 2010 128 755

## Description

The present invention relates to a household appliance comprising a thermal sensor used for measuring the temperature.

Thermal sensors or photo sensors are used when it is required to measure temperature in household appliances such as coffee machine, oven, refrigerator, etc. Since the thermal sensors do not need energy for operation and are advantageous in terms of costs, they are highly preferred. The distance between the thermal sensor and the surface of which the temperature is being measured changes due to operations performed in the household appliance, for example the leavening of the dough in the oven or formation of froth in the coffee machine. If the distance between the position of the thermal sensor and the surface is also required to be determined in addition to the measurement of the temperature, a distance sensor should be used together with the thermal sensor. This situation both increases costs for the manufacturer and also causes a number of structural restrictions such as positioning both sensors side by side in a small household appliance.

In the state of the art Japanese Patent Application No. JP2012057962, a long distance measurement device with decreased energy consumption is disclosed.

In the state of the art American Patent Applications No. US6292256 and US6415241, a camera having a distance measurement circuit comprising an infrared emitting diode is disclosed.

In the state of the art Chinese Patent Application No. CN103926010, a device is disclosed wherein both a thermal sensor used for measuring temperature and a laser distance measuring instrument used for measuring distance are provided.

In the state of the art Chinese Patent Application No. CN202815219, a device having an ultrasonic distance measuring module positioned side by side with a thermal sensor used for measuring temperature is disclosed.

The aim of the present invention is the realization of a household appliance wherein temperature and distance measurements are realized while providing cost advantage.

The household appliance realized in order to attain the aim of the present invention, explicated in the first claim and the respective claims thereof, comprises an infrared light source positioned in close proximity to the thermal sensor used for measuring temperature in a contact-free manner and a control unit that determines the distance between the thermal sensor and the surface according to the difference between the proper temperature of the surface and the surface temperature measured while the light emitted by the light source reflecting from the surface.

In the household appliance of the present invention, the thermal sensor produces electrical energy by detecting the thermal energy of the surface, thus performing the measurement of the temperature. After sending infrared light from the light source to the surface, a difference occurs in the thermal energy transmitted from the surface to the thermal sensor. The effect of the light source on the thermal sensor is inversely proportional to the distance of the light source, also of the thermal sensor since both are located at the same level, to the surface.

The thermal sensor performs a first temperature measurement when the light source is turned off, in other words when no infrared light emitted by the light source is reflected from the surface and a second temperature measurement when the light source is turned on, in other words when the infrared light emitted by the light source is reflected from the surface to be detected by the thermal sensor. The first temperature measurement is the temperature of the surface of which the temperature is desired to be measured. The difference between the temperature value obtained as a result of the second temperature measurement and the temperature of the surface is compared with a calibration data prerecorded in the memory of the control unit and thus the distance between the thermal sensor and the surface is measured.

In another embodiment of the present invention, the temperature value of the light of the light source is selected so as to be above the possible temperature values of the temperature of the surface of which the temperature is desired to be measured. For example, if the highest possible temperature value of the surface is 200 degree Celsius, the light source is selected among the light sources that emit light with around 3 micrometers wavelength corresponding to 500 degree Celsius.

In another embodiment of the present invention, the lights source emits light in an intermittent manner. Thus, in cases wherein both the surface temperature and the distance between the thermal sensor and the surface rapidly change, both temperature and distance can be quickly measured. Moreover, with the light source emitting light in an intermittent manner, the precision of the distance measurement is improved.

In another embodiment of the present invention, LEDs that are cost-effective elements emitting light in the desired wavelength are used as the light source.

In another embodiment of the present invention, the light source is positioned so as to face the surface such that the light emitted thereby moves directly towards the surface of which the temperature is desired to be measured. In this embodiment, it is ensured that there is no reflection from the surfaces other than the surface of which the temperature is desired to be measured, thus preventing any error in the distance measurement.

In another embodiment of the present invention, by means of a barrier placed between the thermal sensor and the light source, the thermal sensor is prevented from being directly affected from the light source.

In another embodiment of the present invention, the thermal sensor is a cost-effective thermopile sensor. The thermopile sensors are preferred since they do not need energy for performing temperature measurement and they have high measurement precision.

By means of the present invention, the temperature of a surface and the distance to the said surface can be measured by using a single thermal sensor. Thus, cost advantage is provided in the household appliances and since the thermal sensor and the light source occupy less space than a distance sensor and a thermal sensor, temperature and distance measurements can be performed in smaller volumes.

The household appliance realized in order to attain the aim of the present invention is illustrated in the attached figures, where:

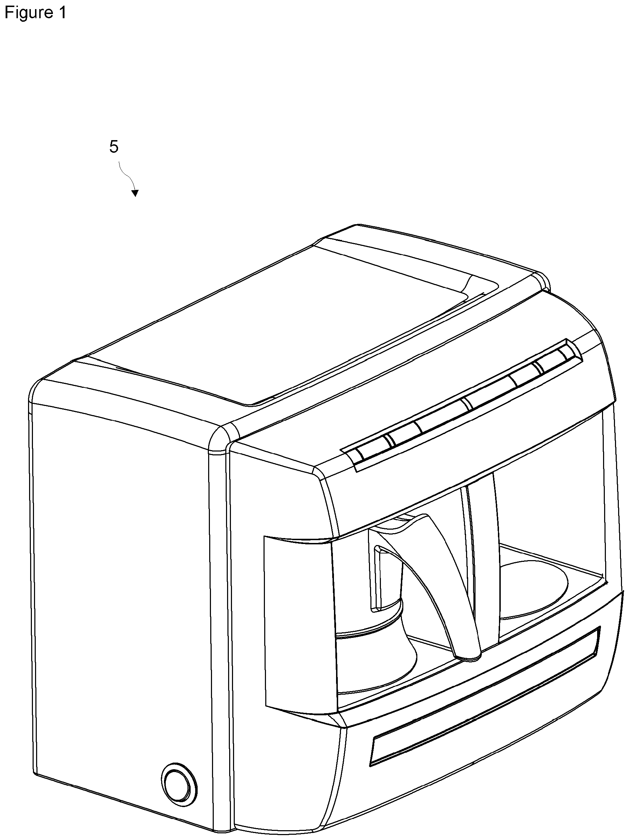

Figure 1 - is the perspective view of the household appliance related to an embodiment of the present invention.

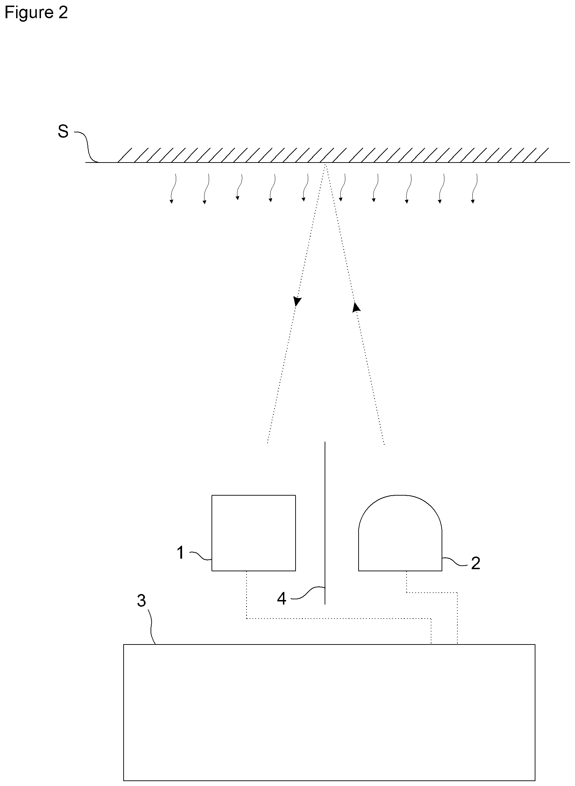

Figure 2 - is the schematic view of the thermal sensor, the light source and the barrier related to an embodiment of the present invention.

The elements illustrated in the figures are numbered as follows:
1. Thermal sensor
2. Light source
3. Control unit
4. Barrier
5. Household appliance
S. Surface

The following symbols are used for explicating the household appliance (5) of the present invention:
Ti: Surface temperature value when the light source is turned off
Tf: Surface temperature value when the light source is turned on

The household appliance (5) comprises a thermal sensor (1) that performs temperature measurement in a contact-free manner from a distance. The thermal sensor (1) is positioned so that there is no obstruct between the same and surface (S) of which the temperature is desired to be measured and detects the thermal energy emitted from the surface (S) and converts it to a signal.

The household appliance (5) of the present invention comprises a light source (2) that is disposed in close proximity to the thermal sensor (1) and that transmits infrared light to the surface (S) of which the temperature is measured by the thermal sensor (1) and a control unit (3) that calculates the distance between the surface (S) of which the temperature is measured and the thermal sensor (1) by comparing the temperature values measured by the thermal sensor (1) when the light source (2) is turned off and turned on.

When the distance between the surface (S) and the thermal sensor (1) is desired to be measured, the control unit (3) firstly measures the temperature value (Ti) of the surface (S) by means of the thermal sensor (1) when the light source (2) is turned off. The said temperature value (Ti) is the proper temperature of the surface (S) itself. The control unit (3) records the said value (Ti) to its memory. Afterwards, the light source (2) emits infrared light to the surface (S) of which the temperature is being measured. The emitted light beam is reflected from the surface (S) of which the temperature is being measured and reaches the thermal sensor (1) together with the radiation carrying the thermal energy of the surface (S). The control unit (3) once again measures the temperature of the surface (S) by means of the thermal sensor (1) and records to its memory the temperature value (Tf) measured by the thermal sensor (1) when the light source (2) is turned on. The temperature value (Tf) of the surface (S) measured when the light source (2) is turned on is a value dependent on both the proper temperature (Ti) of the surface (S) and the distance of the light source (2) to the surface (S). The control unit (3) compares the difference between the temperature value (Tf) measured when the light source (2) is turned on and the temperature value (Ti) measured when the light source (2) is turned off with the calibration data recorded in its memory and thus determines the distance between the thermal sensor (1) and the surface (S).

Since most of the light of the light source (2) is reflected from the surface (S) when the distance between the surface (S) and the thermal sensor (1) is small, the temperature value (Tf) measured when the light source (2) is turned on is different from the temperature value (Ti) measured when the light source (2) is turned off. As the distance between the surface (S) and the thermal sensor (1) decreases, the difference between the proper temperature value (Ti) of the surface (S) and the temperature value (Tf) when the light source (2) is turned on increases. As the distance between the surface (S) and the thermal sensor (1) increases, the temperature value (Tf) measured when the light source (2) is turned on gets close to the temperature value (Ti) measured when the light source (2) is turned off.

For example, when the distance from a surface (S) to the thermal sensor (1) is to be measured, the temperature value (Ti) of the surface (S) is measured and recorded as 100 degree Celsius when the light source (2) is turned off. Afterwards, the light source (2), the temperature value corresponding to the wavelength of the light emitted by which is for example 500 degree Celsius, emits light to the surface (S) and the temperature is measured once again while the infrared light of the light source is reflected from the surface (S). In this case, the temperature value (Tf) measured by the thermal sensor (1) increases a little. When the temperature value (Tf) measured secondly is for example 150 degree Celsius, the 50 degree difference between this value (Tf) and the temperature value (Ti) measured first is inversely proportional to the distance between the light source (2) and the surface (S). The control unit (3) compares the difference with the calibration data recorded in its memory. For example, when the difference is 50 degree Celsius the distance is 10 cm and when the second temperature value (Tf) is 250 degree Celsius the distance is for example 4 cm. The numbers given in this example are hypothetical.

The value (Tf) obtained with the temperature measurement performed while the infrared light of the light source (2) is being reflected from the surface (S) depends on various factors such as optical reflectivity of the surface (S), the field of view of the thermal sensor (1), etc., and the manufacturer conducts a number of experiments taking into account all kinds of factors and the calibration data obtained as such is recorded into the memory of the control unit (3). Thus, making a calibration in the household appliance (5) for measuring the distance is not required since all the information required is recorded in the memory of the control unit (3).

In another embodiment of the present invention, the light source (2) emits light in a wavelength shorter than the wavelength corresponding to the temperature value of the surface (S) of which the temperature is being measured. Thanks to the fact that the temperature value corresponding to the wavelength of the light of the light source (2) is higher than the temperature values that the surface (S) may reach, the distance measurement can be performed in a more precise manner and the margin of error is decreased. Moreover, when the distance of a surface (S) with variable temperature value to the thermal sensor (1) is being determined, the difference between the temperature value (Ti) while the light source (2) is turned off and the proper temperature value of the surface (S) while the light source (2) is turned on is enabled to be much smaller than the difference between the temperature value (Tf) measured while the light source (2) is turned on and the temperature value (Ti) measured while the light source (2) is turned off. Thus, it is ensured that the temperature difference value used for measuring the distance is originated from the light source (2).

In another embodiment of the present invention, the lights source (2) emits light as pulses. With the light source (2) emitting light as pulses instead of emitting continuously, the thermal sensor (1) is prevented from being affected from the light source (2) during the temperature measurement. Thus, both the temperature measurement and the distance measurement can be performed in a more precise manner.

In another embodiment of the present invention, the light source (2) is an infrared LED. LED is used as the light source (2) since it is a cost-effective element that occupies less space.

In another embodiment of the present invention, the lights source (2) faces the surface (S) of which the temperature is being measured. With the light source (2) facing the surface (S) of which the temperature is being measured, the infrared light emitted from the light source (2) is enabled to be reflected from the surface (S) of which the temperature is being measured and to reach to the thermal sensor (1).

In another embodiment of the present invention, the household appliance (5) comprises a barrier (4) that does not permit infrared light to pass through and that is disposed between the thermal sensor (1) and the light source (2). By means of the barrier (4), the thermal sensor (1) is prevented from being affected by the light emitted by the light source (2) in lateral directions.

In another embodiment of the present invention, the thermal sensor (1) is a thermopile sensor. The thermopile sensor is an array produced by connecting more than one thermocouples in series or in parallel. The thermopile sensors are preferred over other thermal sensors (1) due to their costs advantage.

In another embodiment of the present invention, the household appliance (5) is a coffee machine. In the coffee machine, the temperature of the water inside the pot is desired to be measured and also the height of the froth must be determined so as to prevent the coffee from overflowing. In the coffee machine wherein the thermal sensor (1) and the light source (2) of the present invention are used, both measurements can be easily performed.

In another embodiment of the present invention, the household appliance (5) is a cooking device. In cooking devices, for example in ovens, by means of the thermal sensor (1) measuring the temperature of the food inside the mobile tray within the cooking chamber and of an infrared light source (2) positioned in close proximity to the thermal sensor (1), the distance between the tray and the heater can be measured in addition to the measurement of the temperature. Thus, when the food to be cooked is overheated, the mobile tray can be moved away from the heater.

In another embodiment of the present invention, the household appliance (5) is a cooling device. In cooling devices, for example in refrigerators, by means of the thermal sensor (1) measuring the temperature of the foods on the mobile shelves within the body and of an infrared light source (2) positioned in close proximity to the thermal sensor (1), the height of the shelf can be measured in addition to the measurement of the temperature.

The household appliance (5) of the present invention is not limited to the above mentioned household appliances and can be any other household appliance wherein both temperature and distance measurements are required to be performed.

In the household appliance (5) of the present invention, both the temperature and the distance can be measured by means of only the thermal sensor (1) and the light source (2) positioned in close proximity to the thermal sensor (1). Thus, the production costs of the household appliance (5) are decreased and the inner volume of the household appliance (5) can be used more efficiently.

## Claims

1. A household appliance (5) comprising a thermal sensor (1) that provides the measurement of the temperature in a contact-free manner from a distance, **characterized by** a light source (2) that is disposed in close proximity to the thermal sensor (1) and that transmits infrared light to the surface (S) of which the temperature is measured by the thermal sensor (1) and a control unit (3) that calculates the distance between the surface (S) of which the temperature is measured and the thermal sensor (1) by comparing the temperature values measured by the thermal sensor (1) when the light source (2) is turned off and turned on.

2. A household appliance (5) as in claim 1, **characterized by** the light source (9) that emits light in a wavelength shorter than the wavelength corresponding to the possible temperature values of the surface (S) of which the temperature is being measured.

3. A household appliance (5) as in any one of the above claims, **characterized by** the light source (2) that emits light as pulses.

4. A household appliance (5) as in any one of the above claims, **characterized by** the light source (2) that is a LED.

5. A household appliance (5) as in any one of the above claims, **characterized by** the light source (2) that faces the surface (S) of which the temperature is being measured.

6. A household appliance (5) as in any one of the above claims, **characterized by** a barrier (4) that does not permit infrared light to pass through and that is disposed between the thermal sensor (1) and the light source (2).

7. A household appliance (5) as in any one of the above claims, **characterized by** the thermal sensor (1) that is a thermopile sensor.

8. A household appliance (5) as in any one of the above claims, which is a coffee machine.

9. A household appliance (5) as in any one of the above claims 1 to 7, which is a cooking device.

10. A household appliance (5) as in any one of the above claims 1 to 7, which is a cooling device.

## Patentansprüche

1. Ein Haushaltsgerät (5) **besitzt** einen Wärmesensor (1), der die Temperatur berührungslos von einer Entfernung messen kann, **ist dadurch gekennzeichnet,** das seine Lichtquelle (2), die sich in unmittelbar in der Nähe des Wärmesensors (1) befindet **und** das infrarotlicht auf die Oberfläche (S) überträgt, dessen Temperatur durch den Wärmesensor (1) und einer Steuereinheit (3) gemessen wird und die den Abstand zwischen der Oberfläche (S), von der die Temperatur gemessen wird und der der errechneten Wärmesensor (1) durch das Vergleichen der von dem Wärmesensor (1) gemessenen Temperaturwerte, wenn die Lichtquelle (2) aus- und eingeschaltet wird.

2. Ein Haushaltsgerät (5), wie in Anspruch 1 aufgeführt, **ist dadurch gekennzeichnet, dass** die Lichtquelle (9), welches Licht mit einer Wellenlänge unter der Wellenlänge abgibt, die den möglichen Temperaturwerten der Oberfläche (S) entspricht, von deren die Temperatur gemessen wird.

3. Ein Haushaltsgerät (5), wie in einem den vorherigen Ansprüchen aufgeführt, **ist dadurch gekennzeichnet, dass** die Lichtquelle (2) Licht als impulse abgibt.

4. Ein Haushaltsgerät (5), wie in einem den vorherigen Ansprüchen aufgeführt, **ist dadurch gekennzeichnet, dass** die Lichtquelle (2) eine LED ist.

5. Ein Haushaltsgerät (5), wie in einem den vorherigen Ansprüchen aufgeführt, **ist dadurch gekennzeichnet, dass** die Lichtquelle (2) der Oberfläche (S) zugewandt ist, um deren Temperatur zu messen.

6. Ein Haushaltsgerät (5), wie in einem den vorherigen Ansprüchen aufgeführt, **ist durch** eine Barriere (4) **gekennzeichnet,** die kein infrarotlicht durchlässt und zwischen dem Wärmesensor (1) und der Lichtquelle (2) angeordnet ist.

7. Ein Haushaltsgerät (5), wie in einem den vorherigen Ansprüchen aufgeführt, **ist dadurch gekennzeichnet, dass** die Lichtquelle (2) ein Thermosäulensensor ist.

8. Ein Haushaltsgerät (5), wie in einem den vorherigen Ansprüchen aufgeführt, **ist dadurch gekennzeichnet, dass** es eine Kaffeemaschine ist.

9. Ein Haushaltsgerät (5), wie in den Ansprüchen 1 bis 7 aufgeführt, **ist dadurch gekennzeichnet, dass** es ein Kochgerset ist.

10. Ein Haushaltsgerät (5), wie in den Ansprüchen 1 bis 7 aufgeführt, **ist dadurch gekennzeichnet, dass** es ein Kühlgerät ist.

## Revendications

1. - Un appareil électroménager (5) **comprenant** un capteur thermique (1) qui permet la mesure de la température sans contact et à distance, **est caractérisé en ce que** une source de lumière (2) est disposée à proximité immédiate du capteur thermique (1) et qui transmet la lumière infrarouge à la surface (S) dont la température est mesurée par le capteur thermique (1) **et** une unité de commande (3) calcule la distance entre la surface (S) dont la température est mesurée et le capteur thermique (1) en comparant les valeurs de température mesurées par le capteur thermique (1) lorsque la source de lumière (2) est éteinte puis allumée.

2. - Un appareil électroménager (5) selon la déclaration 1, **est caractérisé en ce que** la source lumineuse (9) émet de la lumière dans une longueur d'onde inférieure à celle correspondant aux valeurs de température possibles de la surface (S) dont la température est mesurée.

3. - Un appareil électroménager (5) comme dans l'une quelconque des déclarations ci-dessus, **est caractérisé en ce que** la source lumineuse (2) émet de la lumière par impulsions.

4. - Un appareil électroménager (5) comme dans l'une quelconque des déclarations ci-dessus, **est caractérisé en ce que** la source lumineuse (2) est une LED.

5. - Un appareil électroménager (5) comme dans l'une quelconque des déclarations ci-dessus, **est caractérisé en ce que** la source lumineuse (2) est orientée vers la surface (S) dont la température est mesurée.

6. - Un appareil électroménager (5) comme dans l'une quelconque des déclarations ci-dessus, **est caractérisé en ce qu'il** comporte un obturateur (4) qui ne laisse pas passer la lumière infrarouge et qui est disposé entre le capteur thermique (1) et la source lumineuse (2).

7. - Un appareil électroménager (5) comme dans l'une quelconque des déclarations ci-dessus, **est caractérisé en ce que** le capteur thermique (1) est un capteur thermopile.

8. - Un appareil électroménager (5) comme dans l'une quelconque des déclarations ci-dessus, est une machine à café.

9. - Un appareil électroménager (5) comme dans l'une quelconque des déclarations 1 à 7 ci-dessus, est un appareil de cuisson.

10. - Un appareil électroménager (5) comme dans l'une quelconque des déclarations 1 à 7 ci-dessus, est un dispositif de refroidissement.
